# EUROPÄISCHE PATENTANMELDUNG

(11) **EP 2 863 168 A1**
(43) Veröffentlichungstag der Anmeldung: **22.04.2015**
(21) Anmeldenummer: 14184706.1
(22) Anmeldetag: 15.09.2014
(51) Int. Cl.: G01B 11/30, G01M 11/00, G01N 21/57, G01N 21/88, G01N 21/95

(54) **Verfahren und Messvorrichtung zum Bewerten von Strukturunterschieden einer reflektierenden Oberfläche**

(30) Priorität: 21.10.2013 DE 102013221334
(71) Anmelder: Volkswagen Aktiengesellschaft, 38440 Wolfsburg (DE)
(72) Erfinder: Nöthen, Matthias, 06846 Dessau-Roßlau (DE)

(57) **Zusammenfassung**

Die Erfindung betrifft ein Verfahren zum Bewerten von Strukturunterschieden einer reflektierenden Oberfläche (13) mittels einer Messvorrichtung (10) aufweisend eine Lichtquelle (14) und eine Kamera (16).

Es ist vorgesehen, einen linienförmigen Reflexbereich (15) auf der Oberfläche (13) mit der Lichtquelle (14) zu erzeugen; eine Aufnahme des Reflexbereiches (15) mit der Kamera (16) aufzunehmen; eine linienförmige Lichtkante (20) der Aufnahme (18) im Übergang zwischen Reflexbereich (15) und Oberfläche (13) zu erfassen; zumindest einen Bereich der Lichtkante (20) mit einer Referenzkante zu vergleichen; und den Vergleich zu bewerten.

## Beschreibung

Die Erfindung betrifft ein Verfahren und eine Messvorrichtung zum Bewerten von Strukturunterschieden einer reflektierenden Oberfläche.

Reflektierende Oberflächen wie zum Beispiel die Oberflächen von Blechen, beispielsweise lackierten oder gewalzten Blechen, weisen ein optisches Erscheinungsbild auf, dessen Qualität maßgeblich durch eine glatte Oberfläche beeinflusst oder bestimmt wird. Insbesondere bei hochwertigen Oberflächen, wie beispielsweise lackierten Flächen von Fahrzeugen oder Flugzeugen, ist eine hohe und gleichmäßige Qualität wünschenswert.

Bei größeren Oberflächen oder Flächen wie an Fahrzeugen oder Flugzeugen wird die Qualität des Lackes hinsichtlich des äußeren Erscheinungsbildes oder der Appearance meist nur stichprobenartig von einem Mitarbeiter begutachtet. Die Maßstäbe für die manuelle Bewertung werden regelmäßig definiert und vorgegeben. Die verfügbaren Messgeräte zur Begutachtung einer Oberflächen- oder Lackqualität sind für automatisierte Messungen in der Serienproduktion wie zum Beispiel in der Automobilindustrie weitgehend ungeeignet.

Der Lackauftrag im Lackierprozess unterliegt ständig schwankenden Einflüssen wie der Temperatur, Luftfeuchte, Luftdruck, Viskosität und der chemischen Zusammensetzung des Lackes. Diese Faktoren beeinflussen den aufgetragenen Lack beim Verlaufen zu einer glatten und geschlossenen Lackschicht. Bei nicht optimalen Prozessbedingungen kann eine unebene Oberfläche entstehen, die einfallendes Licht nicht gleichmäßig reflektiert. Diese Oberflächenstruktur wird oft auch als Orange Peel (Orangenhaut) bezeichnet.

Bekannt ist es, ein Messgerät der Firma "BYK Gartner" zu verwenden, welches eine Infrarothochenergie-LED und eine CCD-Kamera in einem Handgerät zum Aufsetzen auf eine fertig lackierte Oberfläche umfasst und so das Strukturspektrum bestimmt.

Darüber hinaus existieren Messgeräte, die auf der konfokalen Mikroskopie basieren und die Rauigkeit beziehungsweise Unebenheiten in der Lackschicht bestimmen.

Daher überprüfen üblicherweise Mitarbeiter stichprobenartig den Lack, indem sie ihn ohne Messgeräte optisch begutachten.

DE 10 2010 060 851 A1 beschreibt ein Verfahren zur Analyse zur Mikrostruktur von Werkstückoberflächen. Dabei werden Grauwerte entlang einer Linie betrachtet und mit einer Fourier-Transformation hinsichtlich ihrer Amplitude und Faser ausgewertet. Dieses Verfahren eignet sich für Oberflächenmerkmale oder Oberflächenstrukturen wie zum Beispiel Honriefen.

DE 41 23 916 C2 zeigt ein Verfahren und eine Vorrichtung zum beleuchtungsdynamischen Erkennen und klassifizieren von Oberflächenmerkmalen und -defekten eines Objektes. Mehrere Beleuchtungsquellen beleuchten das Objekt sequentiell und diffus, so dass die Form bestimmt werden kann.

EP 1 882 896 A1 offenbart ein Verfahren und eine Vorrichtung zur dreidimensionalen Vermessung der Form und der lokalen Oberflächennormalen von vorzugsweise spiegelnden Objekten.

DE 697 03 487 T2 beschreibt ein Verfahren und eine Vorrichtung zur automatischen Prüfung bewegter Oberflächen. Die Oberflächendefekte, die erfasst und klassifiziert werden sollen sind Kratzer, Dellen, Astknoten und dergleichen. Die erkennbaren Defektabmessungen können von 0,1 mm bis zu mehreren Metern variieren. Die Oberfläche wird dabei nach der Dunkel-Feld-Methode beleuchtet.

DE 197 26 094 B4 beschreibt ein Verfahren zur Detektion von Oberflächenfehlstellen mittels einer Vermessung der dreidimensionalen Struktur einer Fehlstelle.

Die am Markt verfügbare Technik hat in der Handhabung entscheidende Nachteile, weswegen die Messeinrichtungen in der Industrie und speziell in der Automobilindustrie nur schlechte Akzeptanz finden.

Das Aufsetzen eines Messgerätes auf eine lackierte Oberfläche ist problematisch, da dies zu Schäden führen kann. Die Führung des Messkopfes (alternativ) mit einem Roboter über die Fahrzeugoberfläche ist aufwändig und kann an frisch lackierten Oberflächen zu Schäden führen.

Die Messungen durch manuelles Aufsetzen sind nur auf sehr kleine Bereiche begrenzt. Bei großen Flächen erfordert die Oberflächenanalyse durch mehrfaches Aufsetzen des Messgerätes einen erheblichen Zeitaufwand und ist durch Ungenauigkeiten bei der Positionierung nicht reprozierbar. Das Messgerät, zum Beispiel der Firma "BYK Gardner", bestimmt nur das Strukturspektrum und gibt mindestens einen Messwert für die Langwelligkeit und Kurzwelligkeit an. Eine allgemeingültige Zuweisung des gemessenen Spektrums beziehungsweise der Langwelligkeit und Kurzwelligkeit zu dem subjektiven Eindruck einer glatten Oberfläche ist seit Jahren nicht realisierbar.

Messgeräte, die auf der konfokalen Mikroskopie basieren, können nur an der obersten Lackschickt Messungen durchführen. Da die Unebenheiten wie beim Orange Peel jedoch durch den unterliegenden Basislack verursacht werden, sind diese Messsysteme nicht für eine Qualitätskontrolle bei derartigen Lacksystemen, die zum Beispiel für die Automobile verwendet werden, geeignet. Weiterhin müssen zum Beispiel konfokale Messsysteme sehr nah an die Oberfläche geführt werden, wodurch die Messung aufwändig wird. Zusätzlich können, bedingt durch das Messprinzip, keine großen Flächen vermessen werden.

Der Erfindung liegt nun die Aufgabe zugrunde, die Bewertung des Erscheinungsbildes einer reflektierenden Oberfläche zu verbessern.

Diese Aufgabe wird gemäß Anspruch 1 beziehungsweise 8 gelöst.

Das erfindungsgemäße Verfahren zum Bewerten von Strukturunterschieden einer reflektierenden Oberfläche mittels einer Messvorrichtung, aufweisend eine Lichtquelle und eine Kamera, umfasst die Schritte,
- Erzeugen eines linienförmigen Reflexbereiches auf der Oberfläche mit der Lichtquelle;
- Aufnehmen einer Aufnahme des Reflexbereiches mit der Kamera;
- Erfassen einer linienförmigen Lichtkante der Aufnahme im Übergang zwischen Reflexbereich und Oberfläche;
- Vergleichen zumindest eines Bereichs der Lichtkante mit einer Referenzkante;
- Bewerten des Vergleichs.

Das erfindungsgemäße Verfahren hat den Vorteil, dass es vollkommen berührungslos arbeitet und gleichzeitig große Oberflächen erfassen kann. Durch die Aufnahme und Bewertung eines Reflexbereiches auf der Oberfläche kann im Gegensatz zu direkten Betrachtungen der Oberfläche das Erscheinungsbild der Oberfläche bewertet werden. In bestimmten Bereichen, wie zum Beispiel bei Kraftfahrzeugen, ist ein perfektes Erscheinungsbild des lackierten Fahrzeuges zumindest genauso wichtig wie die Minimierung von einzelnen Oberflächendefekten. Bislang war eine automatisierte Prüfung gewissermaßen aus der Sicht des Kunden, das heißt mit Blick auf das Erscheinungsbild des Lackes, nicht möglich. Neben der Erfassung des Erscheinungsbildes ist das Verfahren ebenfalls dazu geeignet Fehler im Lack, wie zum Beispiel Einschlüsse, Pickel oder Kocher zu detektieren. Darüber hinaus erlaubt das Verfahren erstmalig eine einheitliche optische Beurteilung der Oberflächenqualität, die automatisch durchgeführt werden kann, das heißt ohne eine stichprobenartige Begutachtung durch einen Mitarbeiter.

Besonders vorteilig ist, dass das Bewertungsverfahren in das Herstellungsverfahren integriert werden kann, wie zum Beispiel bei der Lackierung von Fahrzeugkarosserien. So kann durch die Bestimmung der Lackqualität an jeder Karosserie schnell auf Prozessschwankungen bei der Lackierung reagiert werden. Durch die Feinabstimmung und Nachregelung des Lackierprozesses erhöht sich die Anzahl von fehlerfreien Direktläufer-Karosserien. Damit kann ein geschlossener Regelkreis hinsichtlich der Lackqualität realisiert werden. Online verfügbar und gewissermaßen in Echtzeit kann die Qualität von einzelnen Bereichen oder Teilen der Karosserie beziehungsweise von der gesamten Karosserie beurteilt werden. Hierdurch lassen sich auch Rückschlüsse auf einzelne Lackierstationen und sogar auf einzelne Lackierdüsen schließen, die dadurch überwacht und nachgeregelt werden können.

In bevorzugter Ausgestaltung der Erfindung ist vorgesehen, dass zwei Lichtkanten einer Aufnahme erfasst und verglichen werden und für die Bewertung ein Mittelwert beider Vergleiche gebildet wird. Auf diese Weise kann der Informationsgehalt der Aufnahme für eine Steigerung der Zuverlässigkeit des Verfahrens besser ausgenutzt werden.

Für den Vergleich und/oder die Bewertung kann die Lichtkante längs der Kante in Bereiche unterteilt werden. Dadurch lässt sich die Auflösung des Verfahrens erhöhen und zugleich der Rechenaufwand besser anpassen.

Besonders vorteilhaft ist, dass für das Erfassen, Vergleichen und/oder Bewerten eine auf der Lichtkante verlaufende mathematische Funktion generiert wird. Vor der Erzeugung der mathematischen Funktion wie zum Beispiel einer Fourier-Transformation kann eine Kontrastanpassung und/oder Objekterkennung für die Lichtkante durchgeführt werden. Die Auswertung beziehungsweise das Vergleichen und/oder Bewerten kann dann beispielsweise durch kubische Splines und eine Koeffizientenselektierung realisiert werden. Die Funktionsgenerierung aus den aufgenommenen Reflexen erlaubt eine Datenreduktion und schnelle Verarbeitung.

Vorzugsweise werden die Oberfläche und die Messvorrichtung relativ zueinander bewegt. So ist eine dynamische Betrachtung und Bewertung möglich, was den Durchsatz erhöht und eine einfachere Integration des Verfahrens in bestehende Abläufe erlaubt.

In bevorzugter Ausgestaltung der Erfindung ist vorgesehen, dass die Oberfläche eines Objekts, vorzugsweise eines Fahrzeuges, die Lichtquelle das Objekt zumindest teilweise umgibt. Das Verfahren eignet sich insbesondere für gekrümmte, auch mehrfach gekrümmte, Oberflächen, da die Bewertung ohne einen direkten Kontakt zur Oberfläche mittels einer Reflexion erfolgt.

In weiterer bevorzugter Ausgestaltung der Erfindung ist vorgesehen, dass die Strukturunterschiede in einer ersten Richtung entsprechend einer Längsrichtung der Lichtkante erfasst, verglichen und/oder bewertet werden und dass zumindest stichprobenartig Strukturunterschiede in einer zweiten Richtung erfasst, verglichen und/oder bewertet werden, wobei die zweite Richtung einen Winkel, vorzugsweise einen rechten Winkel, bezüglich der ersten Richtung aufweist. Bei den meisten Anwendungen kann davon ausgegangen werden, dass die in einer Richtung erfassten Strukturunterschiede in anderen Richtungen ähnlich oder identisch sein werden. Sollten Abweichungen bestehen und/oder soll die Kontrolle noch weiter verbessert werden, kann die Oberfläche nochmals in einer oder mehreren anderen Richtungen, das heißt Ausrichtungen zwischen Oberfläche und Lichtquelle, betrachtet werden.

Die erfindungsgemäße Messvorrichtung zum Bewerten von Strukturunterschieden einer reflektierenden Oberfläche mit einer Lichtquelle und mindestens einer Kamera umfasst, dass die Lichtquelle linienförmig über einem Messraum für die Oberfläche ausgebildet ist, dass die Kamera eingerichtet ist, eine Aufnahme der Oberfläche mit einem linienförmigen Reflexbereiches zu erstellen, und dass eine Auswertungseinheit eingerichtet ist, eine linienförmige Lichtkante der Aufnahme im Übergang zwischen Reflexbereich und Oberfläche zu erfassen, zumindest einen Bereich der Lichtkante mit einer Referenzkante zu vergleichen und den Vergleich zu bewerten. Es gelten die gleichen Vorteile und Modifikationen wie zuvor für das Verfahren beschrieben.

In bevorzugter Ausgestaltung der Erfindung ist vorgesehen, dass die linienförmige Lichtquelle den Messraum überspannt und dass mehrere Kameras auf mehrere Messabschnitte ausgerichtet sind, wobei die Messabschnitte entlang der Lichtquelle angeordnet sind. Dabei können sich Erfassungs- oder Aufnahmebereiche der Kamera überlappen oder voneinander getrennt sein. Bei einer Überlappung kann die Robustheit des Verfahrens durch eine Betrachtung beider Kamerabilder erhöht werden. Durch diese Ausgestaltung können große Oberflächen oder Objekte mit mehreren Oberflächen schnell und sicher bewertet werden.

In weiterer bevorzugter Ausgestaltung der Erfindung ist vorgesehen, dass die Kamera eine Kamera einer mobilen Rechnervorrichtung ist, dass die Lichtquelle an der mobilen Rechnervorrichtung angeordnet ist und dass die Auswertungseinheit eine Recheneinheit der mobilen Rechnervorrichtung ist. Damit können mobile Geräte wie zum Beispiel ein Tablet-Computer für die Bewertung einer Oberfläche verwendet werden. Die Lichtquelle kann zum Beispiel als Neonröhre an dem mobilen Gerät befestigt und von dem Gerät mit Spannung versorgt werden, beispielsweise mittels einer USB Schnittstelle. Damit kann die Erfindung einfach realisiert werden und ist weitreichend einsetzbar, zum Beispiel in Werkstätten oder nach einer spot repair, das heißt Instandsetzung einer Lackierung direkt am Fahrzeug.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Darstellung einer Messvorrichtung zum Bewerten von Strukturunterschieden einer reflektierenden Oberfläche;
- Figur 2: eine weitere schematische Darstellung einer Messvorrichtung zum Bewerten von Strukturunterschieden einer reflektierenden Oberfläche;
- Figur 3: eine Aufnahme eines linienförmigen Reflexbereiches auf der Oberfläche; und
- Figur 4: zwei Diagramme mit einer Auswertung der Aufnahme.

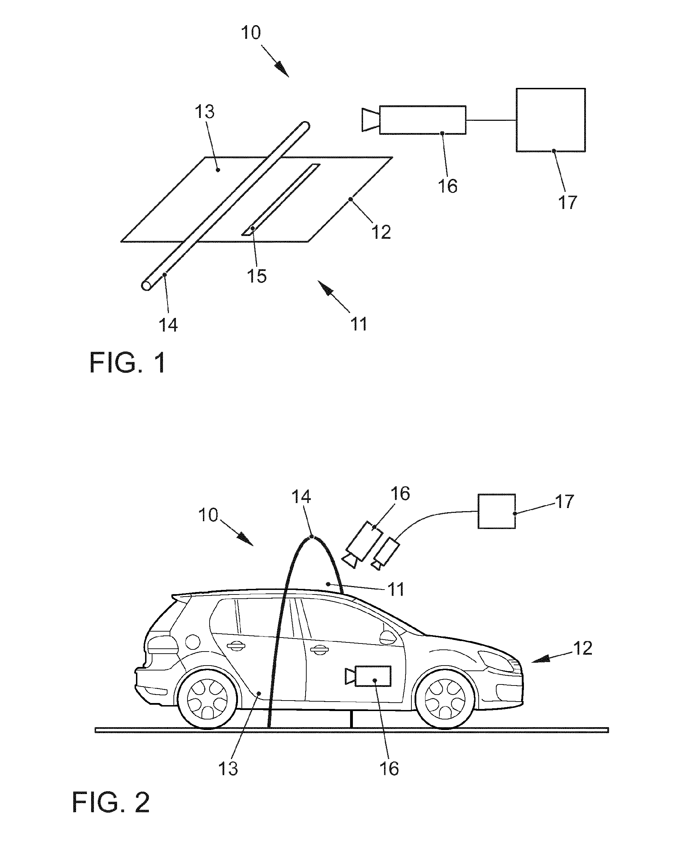

Figur 1 zeigt eine Messvorrichtung 10 mit einem Messraum 11 zur Aufnahme eines Werkstückes 12 mit einer reflektierenden Oberfläche 13. Eine linienförmige Lichtquelle 14 überspannt den Messraum 11. Die Linienförmige Lichtquelle 14 kann zum Beispiel eine oder mehrere Leuchtstoffröhren, LED-Lampen gegebenenfalls mit Umlenkspiegeln oder Laser aufweisen.

Auf der Oberfläche 13 erzeugt die Linienförmige Lichtquelle 14 einen linienförmigen Reflexbereich 15. Die Abbildung der linienförmigen Lichtquelle 14 erscheint bei nicht optimaler Oberflächenstruktur des Lackes oder der Oberfläche auf der Oberfläche 13 vereinfacht als Wellenlinie. Diese Wellenlinie wird durch den lokalen Neigungswinkel der Oberfläche 13 hervorgerufen, wodurch helle Felder, hier wird das Licht zum Beobachter reflektiert, und dunkle Felder, hier wird kein oder weniger Licht zum Beobachter reflektiert, entstehen.

Dieser Eindruck der hellen und dunklen Felder beziehungsweise des linienförmigen Reflexbereiches 15 wird von einer oder mehreren Kameras 16 aufgenommen. Idealer Weise sind diese Kameras hochauflösend. Die Optik der Kamera 16 ist dabei auf die Oberfläche 13 fokussiert. Bevorzugt sind im Messraum 11 beziehungsweise in der Umgebung des Messraumes 11 geringe störende Streulichteinflüsse vorhanden. Das konzentrierte Licht der Lichtquelle 14 erzeugt einen direkten Lichtreflex 15 auf der Oberfläche 13. Damit ist das vorliegende Verfahren eine Hellfeldmethode.

Die Kamera 16 beziehungsweise die Kameras 16 sind mit einer Auswertungseinheit 17 verbunden. Die Auswertungseinheit 17 dient zur weiteren Verarbeitung und/oder Bearbeitung der Aufnahmen des Reflexes 15, was im Folgenden weiter beschrieben wird.

Die Bewertung von Strukturunterschieden der Oberfläche 13 beziehungsweise die Bestimmung der Oberflächenqualität oder Lackqualität orientiert sich an der manuellen Prüfung und ist auf das Erscheinungsbild der Oberfläche 13, wie es ein Kunde wahrnimmt, gerichtet. Damit unterscheidet sich das vorliegende Verfahren von den reinen Fehlererkennungsverfahren, bei denen einzelne Fehlstellen wie Kratzer, Lunker und so weiter detektiert werden sollen. Erfindungsgemäß werden Strukturunterschiede in Mikrometer-Bereich untersucht. Durch die erfindungsgemäße Bewertung der Oberfläche 13, die sich nicht nur auf punktförmige Bereiche, sondern auf linienförmige Reflexbereiche 15 mit einer Länge von wenigen Zentimetern bis zu mehreren Dezimetern reicht, wird vorzugsweise ein linienförmiger Reflexbereich 15 mit einer Länge von 1 - 30 Zentimeter, besonders bevorzugt von 5 - 10 Zentimetern, erfasst und verarbeitet.

Durch diese Vorgehensweise kann bei Lacken auch ein Rückschluss auf Unebenheiten im Basislack, der unter der obersten Lackschicht liegt, getroffen werden. Das vorliegende Verfahren erlaubt somit nicht nur eine reine Betrachtung der Oberfläche 13, sondern auch aller darunter liegenden Schichten, einschließlich des Bleches. So kann auch bei perfekter oberster Lackschicht eine Welligkeit in einer der darunter liegenden Schichten mit diesem Verfahren detektiert werden.

Da das Werkstück 12 über den linienförmigen Reflexbereich 15 gewissermaßen indirekt und berührungslos abgetastet wird, können auch gekrümmte und mehrfach gekrümmte Oberflächen vermessen und bewertet werden. Weiterhin ist es möglich, dass sich das Werkstück 12 beziehungsweise die Messvorrichtung 10 während des Messvorganges bewegen, um so einen höheren Durchsatz beim Messvorgang zu erzielen.

Anhand von Figur 2 wird nun ein weiteres Ausführungsbeispiel der Messvorrichtung 10 diskutiert. Hier wird der Messraum 11 durch einen Fußboden oder ein Förderband sowie eine darüber bogenförmig angeordnete linienförmige Lichtquelle 14 definiert. Das Werkstück 12 ist hier ein Kraftfahrzeug, welches zum Beispiel aus der Klarlacktrocknung kommt und in die Finish-Linie einfahren soll. Während oder nach Beendigung des Abtrocknungsvorganges wird dann gemäß des erfindungsgemäßen Verfahrens die Oberfläche 13, beziehungsweise die Vielzahl von gekrümmten Oberflächen 13 des Kraftfahrzeugs 12 erfasst und bewertet.

Die lackierten Karossen 12 fahren dabei mit einer konstanten Geschwindigkeit, zum Beispiel einer Bandgeschwindigkeit von 5 Metern pro Minute, an einer oder mehreren linienförmigen Lichtquellen 14 vorbei. Eine oder mehrere Kameras 16, wie zum Beispiel CCD-Kameras, nehmen dabei die Reflexion oder die Reflexionen der Lichtquelle 14 auf den Fahrzeugoberflächen 13 auf und stellen diese Aufnahmen oder Reflektogramme der Auswertungseinheit 17 zur Verfügung. Eine Verbindung zwischen Kamera 16 und der Auswertungseinheit ist beispielhaft dargestellt. Aus Gründen der Übersichtlichkeit sind die anderen Verbindungen zwischen den Kameras 16 und der Auswertungseinheit 17 nicht dargestellt. Die Lichtquellen 14 und die Kameras 16 befinden sich zirka 1 bis 2 Meter vom Messraum 11 beziehungsweise vom Fahrzeug 12 entfernt.

Die Auswertungseinheit 17 kann Teil der Messvorrichtung 10 oder Bestandteil eines Prozesssteuerungssystems sein. Die Bewertung der Lackqualität des Fahrzeugs 12 in Echtzeit durch die Auswertungseinheit 17 erlaubt eine Einbindung dieser Messergebnisse in den Lackierprozess des Kraftfahrzeuges 12. Damit kann ein geschlossener Regelkreis hinsichtlich der Lackqualität des Kraftfahrzeuges 12 erreicht werden.

Nachdem das Erzeugen des linienförmigen Reflexbereiches 15 auf der Oberfläche 13 und dessen Aufnahme durch mindestens eine Kamera 16 beschrieben worden ist, wird im Folgenden die Auswertung und Bewertung der Oberfläche 13, insbesondere von Strukturunterschieden der Oberfläche 13, im Detail beschrieben.

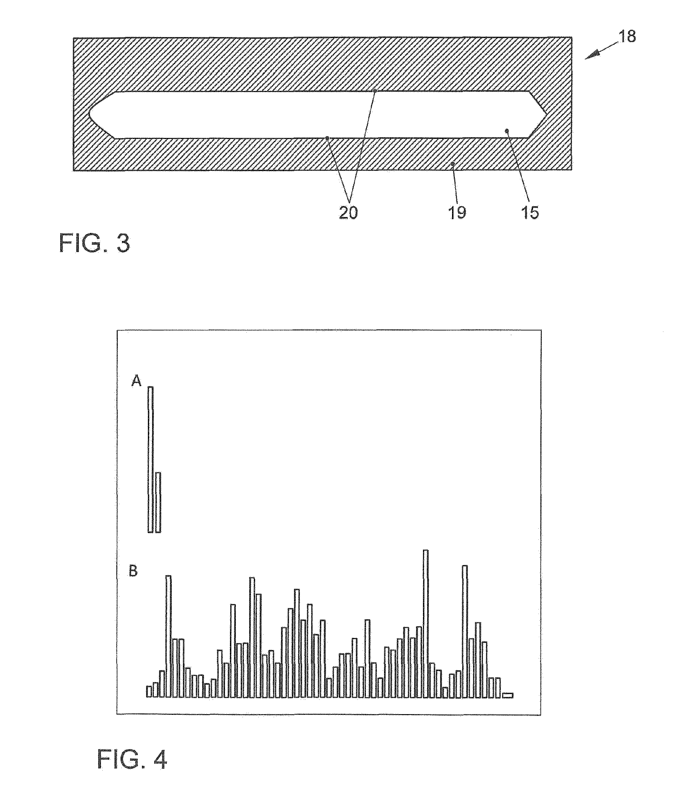

Figur 3 zeigt die Aufnahme 18 eines linienförmigen Reflexbereiches 15 beziehungsweise eines Abschnittes oder Bereichs des Reflexbereiches 15. Die Aufnahme 18 umfasst neben dem Reflexbereich 15, der hell oder weiß erscheint, und einen weiteren, nicht reflektierenden Bereich 19, der dunkel erscheint. Die Definition des linienförmigen Reflexbereiches 15 kann auch den nicht reflektierenden Bereich 19 umfassen.

Im Kontrastübergang zwischen dem hellen Reflexbereich 15 und dem dunklen nicht reflektierenden Bereich 19 verläuft jeweils eine Lichtkante 20. Diese Lichtkante 20 ist im Idealfall eine Gerade, wird im Messfall die Form einer Wellenlinie haben.

Nach der Aufnahme des Reflektogramms beziehungsweise der Aufnahme 18 wird zunächst eine Kontrastanpassung der Aufnahme 18 durchgeführt. Anschließend wird mittels einer Objekterkennung die Lichtkante 20 oder die Lichtkanten 20 erkannt. In einer anschließenden Segmentierung der Aufnahme 18 werden die Lichtkanten 20 freigeschnitten und in Bereiche mit einer Kantenlänge von etwa 5 bis 10 Zentimetern unterteilt. Diese Segmentierung erhöht die Robustheit und die Auflösung des Verfahrens.

Nun wird die extrahierte Lichtkante 20 ausgewertet. Dafür wird eine mathematische Funktion generiert, die auf der Lichtkante 20 der reflektierten Lichtquelle 14 verläuft. Dazu wird eine Fourier-Transformation oder Fast-Fourier-Transformation verwendet. Werden beide Lichtkanten 20 erfasst und verwendet, kann eine Mittelung über die beiden Kanten erfolgen. Die Auswertung der Lichtkante 20 erfolgt dann zum Beispiel über kubische Splines, durch welche eine Näherung beziehungsweise Abbildung der Lichtkante 20 erreicht wird, sowie eine Koeffizientenselektierung zur Transformation in ein Spektrum.

In Figur 4 ist beispielhaft ein derartiges Spektrum dargestellt, dort sind die Koeffizienten im Spektrum dargestellt. Im oberen Diagramm A sind die Koeffizienten in einem kurzwelligen Spektrum dargestellt, während in dem unteren Diagramm B die Koeffizienten in einem Mittelwellenspektrum dargestellt sind. Ein drittes Langwellenspektrum ist hier aus Gründen der Übersichtlichkeit nicht dargestellt. Diese spektrale Darstellung oder das Strukturspektrum orientiert sich an den Messergebnissen von bestehenden Messgeräten, wie zum Beispiel der Firma "BYK Gardner".

Nachdem die linienförmige Lichtkante 20 nunmehr vollständig mathematisch erfasst ist, wird zumindest ein Bereich der Lichtkante 20 mit einer Referenzkante oder Referenzlichtkante verglichen. Die Referenzkante wird durch eine oder mehrere Referenzaufnahmen an einer Glasscheibe, einem Spiegel, einer polierten metallischen Oberfläche und/oder einer lackierten Referenzoberfläche erzeugt. Dabei wird das oben beschrieben mathematische Auswertungsbeziehungsweise Erfassungsverfahren verwendet. Durch den Vergleich beziehungsweise die Korrelation von der Lichtkante 20 mit der Referenzkante wird eine automatisierte Bewertung der Messung vorgenommen.

In einer Normierungs- oder Kalibrierungsphase wird die Bewertung der Qualität der Lackoberfläche 13 durch Experten vorgenommen und eingestellt. Die Bewertung oder Auswertung der Korrelation beziehungsweise des Korrelationsfaktors führt zu einem Messwert oder einer Qualitätsmaßzahl, der oder die einen Wertebereich zum Beispiel von 0 bis 100 aufweisen kann. Die von Experten vorgenommene Normierung des Wertebereiches kann zum Beispiel derart aussehen, dass eine sehr gute Lackoberfläche oder Qualität eine Maßzahl zwischen 80 und 100 aufweist, eine gute Qualität eine Maßzahl zwischen 50 und 80 aufweist und eine schlechte Qualität eine Maßzahl zwischen 0 und 50 umfasst.

Mittels dieser in Echtzeit generierten nummerischen Bewertung der Lackqualität kann ein Mitarbeiter oder ein Prozessleitsystem die Prozessparameter des Lackiervorganges direkt anpassen. Darüber hinaus kann die Qualitätsmaßzahl für eine Dokumentation des Lackierprozesses benutz werden.

Während es möglich ist, die Lackbegutachtung nur an bestimmten Bauteilen durchzuführen, wie zum Beispiel der Motorhaube, dem Dach, oder den Türen, ist es vorteilhaft, die gesamte Fahrzeugoberfläche zu begutachten. Weil es hinsichtlich der Benetzung der Oberfläche 13 und den Verlaufseigenschaften des Lackes große Unterschiede zwischen vertikalen und horizontalen Oberflächen 13 geben kann, können durch die gesamte Betrachtung Problemstellen besser identifiziert und berücksichtigt werden.

### Bezugszeichenliste

- 10: Messvorrichtung
- 11: Messraum
- 12: Werkstück
- 13: Oberfläche
- 14: Lichtquelle
- 15: Reflexbereich
- 16: Kamera
- 17: Auswertungseinheit
- 18: Aufnahme
- 19: nicht reflektierender Bereich
- 20: Lichtkante

## Patentansprüche

1. Verfahren zum Bewerten von Strukturunterschieden einer reflektierenden Oberfläche (13) mittels einer Messvorrichtung (10) aufweisend eine Lichtquelle (14) und eine Kamera (16), **gekennzeichnet durch**,
- Erzeugen eines linienförmigen Reflexbereiches (15) auf der Oberfläche (13) mit der Lichtquelle (14);
- Aufnehmen einer Aufnahme des Reflexbereiches (15) mit der Kamera (16);
- Erfassen einer linienförmigen Lichtkante (20) der Aufnahme (18) im Übergang zwischen Reflexbereich (15) und Oberfläche (13);
- Vergleichen zumindest eines Bereichs der Lichtkante (20) mit einer Referenzkante;
- Bewerten des Vergleichs.

2. Verfahren nach Anspruch 1, **dadurch gekennzeichnet, dass** zwei Lichtkanten (20) einer Aufnahme (18) erfasst und verglichen werden und für die Bewertung ein Mittelwert beider Vergleiche gebildet wird.

3. Verfahren nach einem der vorhergehenden Ansprüche, **dadurch gekennzeichnet, dass** für den Vergleich und/oder die Bewertung die Lichtkante (20) längs der Kante in Bereiche unterteilt wird.

4. Verfahren nach einem der vorhergehenden Ansprüche, **dadurch gekennzeichnet, dass** für das Erfassen, Vergleichen und/oder Bewerten eine auf der Lichtkante (20) verlaufende mathematische Funktion generiert wird.

5. Verfahren nach einem der vorhergehenden Ansprüche, **dadurch gekennzeichnet, dass** die Oberfläche (13) und die Messvorrichtung (10) relativ zueinander bewegt werden.

6. Verfahren nach einem der vorhergehenden Ansprüche, **dadurch gekennzeichnet, dass** die Oberfläche (13) eines Objekts, vorzugsweise die eines Fahrzeuges ist und dass die Lichtquelle (14) das Objekt zumindest teilweise umgibt.

7. Verfahren nach einem der vorhergehenden Ansprüche, **dadurch gekennzeichnet, dass** die Strukturunterschiede in einer ersten Richtung entsprechend einer Längsrichtung der Lichtkante (20) erfasst, verglichen und/oder bewertet werden und dass zumindest stichprobenartig Strukturunterschiede in einer zweiten Richtung erfasst, verglichen und/oder bewertet werden, wobei die zweite Richtung einen Winkel, vorzugsweise einen rechten Winkel, bezüglich der ersten Richtung aufweist.

8. Messvorrichtung (10) zum Bewerten von Strukturunterschieden einer reflektierenden Oberfläche (13) mit einer Lichtquelle (14) und mindestens einer Kamera (16), **dadurch gekennzeichnet, dass** die Lichtquelle (14) linienförmig über einem Messraum (11) für die Oberfläche (13) ausgebildet ist, dass die Kamera (16) eingerichtet ist, eine Aufnahme (18) der Oberfläche (13) mit einem linienförmigen Reflexbereiches (15) zu erstellen, und dass eine Auswertungseinheit (17) eingerichtet ist, eine linienförmige Lichtkante (20) der Aufnahme (18) im Übergang zwischen Reflexbereich (15) und Oberfläche (13) zu erfassen, zumindest einen Bereich der Lichtkante (20) mit einer Referenzkante zu vergleichen und den Vergleich zu bewerten.

9. Messvorrichtung (10) nach Anspruch 8, **dadurch gekennzeichnet, dass** die linienförmige Lichtquelle (14) den Messraum (11) überspannt und dass mehrere Kameras (16) auf mehrere Messabschnitte ausgerichtet sind, wobei die Messabschnitte entlang der Lichtquelle (14) angeordnet sind.

10. Messvorrichtung (10) nach Anspruch 8, **dadurch gekennzeichnet, dass** die Kamera (16) eine Kamera einer mobilen Rechnervorrichtung ist, dass die Lichtquelle (14) an der mobilen Rechnervorrichtung angeordnet ist und dass die Auswertungseinheit (17) eine Recheneinheit der mobilen Rechnervorrichtung ist.
